# EUROPEAN PATENT APPLICATION

(11) **EP 4 411 927 A1**
(43) Date of publication of application: **07.08.2024**
(21) Application number: 22872687.3
(22) Date of filing: 05.09.2022
(51) Int. Cl.: H01M 10/0585, H01M 10/052, H01M 10/0562

(54) **SOLID STATE BATTERY, SOLID STATE BATTERY MANUFACTURING METHOD, AND SOLID STATE BATTERY MANUFACTURING DEVICE**

(30) Priority: 27.09.2021 JP 2021157136
(71) Applicant: Hitachi Zosen Corporation, Osaka-shi, Osaka 559-8559 (JP)
(72) Inventor: SUGIYO Takeshi, Osaka-shi, Osaka 559-8559 (JP)
(74) Representative: Grünecker Patent- und Rechtsanwälte PartG mbB
(86) International application number: PCT/JP2022/033294
(87) International publication number: WO 2023/047931

(57) **Abstract**

The disclosed production method includes step (i) and step (ii) in this order. The step (i) is a step of preparing a laminate (100) including a power generating element (110) including a positive electrode layer (111), a negative electrode layer (112), and a solid electrolyte layer (113) disposed between the positive electrode layer (111) and the negative electrode layer (112), and at least one metal foil (121) disposed on at least one principal surface of the power generating element (110). The step (ii) is a step of breaking the power generating element (110) at a linear division position (100d), and cutting the at least one metal foil (121) at the division position (100d).

## Description

### [Technical Field]

The present disclosure relates to a solid-state battery, a production method of a solid-state battery, and a production apparatus of a solid-state battery.

### [Background Art]

Currently, solid-state batteries are attracting attention. A solid-state battery includes a laminate (power generating element) in which a solid electrolyte layer is disposed between a positive electrode current collector and a negative electrode current collector. In the case of producing a solid-state battery, a large laminate including power generating elements of a large number of batteries may be produced, and thereafter the laminate may be divided into laminates respectively corresponding to the batteries. Conventionally, various methods for dividing the laminate have been proposed.

Patent Literature 1 (Japanese Laid-Open Patent Publication No. 2020-61258) discloses "a production method of a solid-state battery including: a laminate pressing step of pressing a laminate in which a positive electrode layer, a negative electrode layer, a solid electrolyte layer between the positive electrode layer and the negative electrode layer are stacked; and a shearing step of punching out the laminate into a predetermined shape by shearing, to form a plurality of cell components."

Patent Literature 2 (WO 2019/131503) discloses "a production method of an all-solid-state battery including: a laminate forming step of forming a laminate including a first electrode layer, a second electrode layer having a polarity opposite of a polarity of the first electrode layer, and a solid electrolyte layer interposed between the first electrode layer and the second electrode layer; and a cutoff step of cutting off an outer peripheral edge of the laminate, the laminate containing a powder material."

### [Citation List]

### [Patent Literatures]

Patent Literature 1: Japanese Laid-Open Patent Publication No. 2020-61258
Patent Literature 2: WO 2019/131503

### [Summary of Invention]

### [Technical Problem]

However, the method in which the laminate is punched out by shearing as in Patent Literature 1 is problematic in that the cross section of the laminate is roughened, so that a short circuit between the positive electrode layer and the negative electrode layer is likely to occur. Under such a circumstance, it is an object of the present disclosure to provide a production method and a production apparatus of a solid-state battery that are less likely to cause a short circuit between a positive electrode layer and a negative electrode layer.

### [Solution to Problem]

An aspect of the present disclosure relates to a production method of a solid-state battery. The production method includes, in order, the steps of (i) preparing a laminate including a power generating element including a positive electrode layer, a negative electrode layer, and a solid electrolyte layer disposed between the positive electrode layer and the negative electrode layer, and at least one metal foil disposed on at least one principal surface of the power generating element; and (ii) breaking the power generating element at a linear division position, and cutting the at least one metal foil at the division position.

Another aspect of the present disclosure relates to a production apparatus of a solid-state battery. The production apparatus is a production apparatus of a solid-state battery, the solid-state battery including a laminate including a power generating element including a positive electrode layer, a negative electrode layer, and a solid electrolyte layer disposed between the positive electrode layer and the negative electrode layer, and at least one metal foil disposed on at least one principal surface of the power generating element. The production apparatus includes: a breaking mechanism for breaking the power generating element at a linear division position; and a cutting mechanism for cutting the at least one metal foil at the division position.

### [Advantageous Effects of Invention]

According to the present disclosure, it is possible to produce a solid-state battery while suppressing a short circuit between a positive electrode layer and a negative electrode layer.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1A] A view schematically showing an example of a step of a production method according to the present embodiment.
[FIG. 1B] A cross-sectional view schematically showing an example of a step subsequent to FIG. 1A.
[FIG. 1C] A cross-sectional view schematically showing an example of a step subsequent to FIG. 1B.
[FIG. 1D] A cross-sectional view schematically showing an example of a step subsequent to FIG. 1C.
[FIG. 1E] A cross-sectional view schematically showing an example of a step subsequent to FIG. 1D.
[FIG. 2] A top view schematically showing an arrangement of members shown in FIG. 1B.
[FIG. 3] A schematic view for illustrating the state of a laminate shown in FIG. 1C.
[FIG. 4] A view schematically showing the configuration of an example of a production apparatus according to the present embodiment.
[FIG. 5] A view schematically showing the configurations of other examples of the production apparatus and the production method according to the present embodiment.
[FIG. 6] A cross-sectional view schematically showing another example of a second mold.
[FIG. 7] A cross-sectional view schematically showing an example of another production method according to the present embodiment.

### [Description of Embodiments]

In the following, embodiments of the present disclosure will be described by way of examples. However, the present disclosure is not limited to the examples described below. Although examples of specific numerical values and materials may be given in the following description, other numerical values and materials may be used as long as the invention according to the present disclosure can be practiced. In the present specification, the expression "from a numerical value Ato a numerical value B" includes the numerical value A and the numerical value B, and can be read as "a numerical value A or more and a numerical value B or less". In the following description, when examples of numerical values of lower limits and upper limits relating to specific physical properties, conditions, and the like are given, any of the examples of lower limits and any of the examples of upper limits can be freely combined unless the lower limit is greater than or equal to the upper limit.

In the following, first and second production methods for producing a solid-state battery will be described. The first production method and the second production method may be hereinafter referred to as a "production method (M1)" and a "production method (M2)", respectively. Examples of the solid-state battery produced by the production method (M1) and the production method (M2) include batteries referred to by names such as an all-solid-state battery, a semi-solid-state battery, a pseudo-solid state battery, and an all-resin battery.

The production method (M1) and the production method (M2) are particularly preferably used for producing an all-solid-state battery. In the following, embodiments relating to an all-solid-state battery will be mainly described. However, in the case of producing a solid-state battery other than an all-solid-state battery, a power generating element of the corresponding solid-state battery may be used as the power generating element. In the following description, an "all-solid-state battery" may be read as a "solid-state battery" in any description other than those applicable to only a specific battery, as long as no inconsistency arises in the description. In general, an "all-solid-state battery" may be referred to as a "solid-state battery". Therefore, as long as no inconsistency arises in the description, an "all-solid-state battery" may be read as a "solid-state battery".

Furthermore, the present disclosure relates to a solid-state battery (e.g., an all-solid-state battery) produced by the production method (M1), or to a solid-state battery (e.g., an all-solid-state battery) produced by the production method (M2). A divided surface, which is divided by a breaking step described below, of the power generating element is less likely to cause a short circuit than a divided surface, which is divided by a shearing step, of the power generating element. Accordingly, the solid-state battery is less likely to cause a short circuit also after production, and thus are highly reliable.

In this specification, examples of the solid-state battery include batteries that do not include a liquid component as a constituent element of the electrolyte. For example, examples of the solid-state battery include batteries that do not include a liquid component as a constituent element required to function as batteries, and more specific examples thereof include batteries that do not include a liquid component. Here, a "liquid component" means a component that is liquid at room temperature (25 °C).

### (First production method (M1))

The first production method (M1) according to the present embodiment is a production method of a solid-state battery (e.g., an all-solid-state battery). The production method (M1) includes a step (i) and a step (ii) in this order. The step (i) is a step of preparing a laminate including a power generating element including a positive electrode layer, a negative electrode layer, and a solid electrolyte layer disposed between the positive electrode layer and the negative electrode layer, and at least one metal foil disposed on at least one principal surface of the power generating element. The step (ii) is a step of breaking the power generating element at a linear division position, and cutting the at least one metal foil at the division position.

In the step (i), the at least one metal foil is disposed on one side (one principal surface) or both sides (two principal surfaces) of the power generating element. When the metal foil is disposed (stacked) on only one side of the power generating element, the laminate includes one metal foil. When the metal foils are disposed (stacked) on both sides of the power generating element, the laminate includes two metal foils. In the step (ii), "cutting at least one metal foil" means, when the metal foil is disposed on only one side of the power generating element, cutting the one disposed metal foil, and means, when the metal foils are disposed on both sides of the power generating element, cutting the two disposed metal foils. In one aspect, the step (ii) is a step of breaking the power generating element at a linear division position, and cutting, at the division position, all the metal foils included in the laminate. In the following, the step of breaking the power generating element at the division position may be referred to as a "breaking step", and the step of cutting the at least one metal foil at the division position may be referred to as a "cutting step".

In the production method (M1), a laminate having a size larger than the size (hereinafter may be referred to as a "final size") of a laminate used for one solid-state battery is prepared in the step (i). Then, the laminate is divided in the step (ii). Eventually, the laminate is divided into final size laminates. In a typical example, a laminate having a size corresponding to the size of final-size laminates arranged in a matrix is prepared in the step (i). Next, the step (ii) is repeated to form a plurality of band-shaped laminates. Next, the step (ii) is repeated for each of the band-shaped laminates to obtain a plurality of final-size laminates. In another example, a laminate having a size slightly larger than the final size is produced, and ends of the laminate are divided and removed in the step (ii), to obtain one final-size laminate. The number of final-size laminates formed from the laminate prepared in the step (i) is 1 or more or 2 or more, and may be in the range from 1 to 1000 (e.g., the range from 1 to 100 and the range from 2 to 100). The planar shape of the final-size laminate is not particularly limited, but is preferably a shape composed of straight sides, and may be a square (regular square or rectangular) shape or a diamond shape.

### (Step (i))

The step (i) of the production method (M1) is a step of preparing a laminate including a power generating element including a positive electrode layer, a negative electrode layer, and a solid electrolyte layer disposed between the positive electrode layer and the negative electrode layer, and at least one metal foil disposed on at least one principal surface of the power generating element. The metal foil is usually disposed so as to cover the whole or substantially the whole of at least one principal surface (one side or both sides) of the power generating element. That is, the metal foil is disposed so as to cover a linear division position.

When the metal foil is disposed on only one side of the power generating element, the metal foil may be disposed on the positive electrode layer side, or may be disposed on the negative electrode layer side. For example, the laminate may have a stacked structure of metal foil/positive electrode layer/solid electrolyte layer/negative electrode layer, or have a stacked structure of metal foil/negative electrode layer/solid electrolyte layer/positive electrode layer. Note that the power generating element per se is a laminate having a stacked structure of positive electrode layer/solid electrolyte layer/negative electrode layer. When the metal foils are disposed on both sides of the power generating element, the laminate has a stacked structure of metal foil/positive electrode layer/solid electrolyte layer/negative electrode layer/metal foil. Note that these laminates may include a layer other than the above-described layers between layers, or between a metal foil and a layer.

The planar shape of the laminate prepared in the step (i) and the planar shape of the final-size laminate are not limited, and may be, for example, a square shape. The size of the planar shape of the final-size laminate is not limited, and each side of the planar shape may be 1 cm or more, or 50 cm or less. The planar shape of the final-size laminate may have a size that can be fitted in a regular square having a length of one side in the range from 1 cm to 50 cm (e.g., the range from 1 cm to 30 cm or the range from 1 cm to 20 cm).

The thickness of the metal foil may be in the range from 1 µm to 50 µm (e.g., the range from 5 µm to 20 µm). A metal foil having such a thickness is preferably cut by shearing. The planar shape of the metal foil on which the power generating element is disposed is usually the same as, or larger than the planar shape of the power generating element, but is not particularly limited. When a metal foil is also disposed on the power generating element, the planar shape of the metal foil may be the same as, or smaller than the planar shape of the power generating element.

The thickness of the power generating element may be in the range from 100 µm to 1000 µm (e.g., the range from 200 µm to 800 µm). When a power generating element having such a thickness is cut by shearing, a short circuit due to a roughened cut surface is particularly likely to occur. The thickness of the positive electrode layer may be in the range from 50 µm to 500 µm (e.g., the range from 100 µm to 300 µm). The thickness of the solid electrolyte layer may be in the range from 10 µm to 300 µm (e.g., the range from 30 µm to 100 µm). The thickness of the negative electrode layer may be in the range from 50 µm to 500 µm (e.g., the range from 100 µm to 300 µm). The production method (M1) is preferably used for producing a solid-state battery using a thin power generating element.

The materials and the formation method of the power generating element are not particularly limited. For example, known materials and known formation methods may be used as the materials and the formation methods of the positive electrode layer, the negative electrode layer, and the solid electrolyte layer. The metal foil is also not particularly limited, and any metal foil used as current collectors of solid-state batteries may be used. The power generating element may be formed only by the positive electrode layer, the negative electrode layer, and the solid electrolyte layer. Alternatively, the power generating element may include another layer as long as the power generating element can be broken in the breaking step. Examples of such another layer include a thin conductive layer formed of a material including a conductive powder.

The step (i) of preparing a laminate may be a method of producing a laminate from a material, or may be a step of obtaining an already produced laminate. In the case of producing a laminate from a material, the laminate is preferably formed by a production process including a step of pressing a material for forming the power generating element. The step (i) may or may not be a step of placing (preparing) a laminate at a predetermined position. For example, the step (i) of preparing a laminate may be a step of placing a laminate on a first mold described below. In that case, a subsequent step is performed for the laminate disposed on the first mold.

In the step (i), the laminate may be prepared by stacking the respective materials of the positive electrode layer, the solid electrolyte layer, and the negative electrode layer, and the at least one metal foil, and thereafter pressing together (performing main pressing of) the materials and the metal foil that are stacked. For example, in an example of the step (i), the material of the positive electrode layer, the material of the solid electrolyte layer, and the material of the negative electrode layer (and the metal foil as necessary) are stacked in a predetermined order on a metal foil, and thereafter the materials and the one or two metal foils that are stacked are pressed (subj ected to main pressing) together, thus forming a laminate. This formation method can be preferably used in the case of producing a laminate of an all-solid-state battery. Through this main pressing, the one or two metal foils and the layers are integrated to obtain a laminate. The pressure used for the main pressing may be changed as appropriate according to the material, the thickness, and so forth, and may be 50 MPa or more and 5000 MPa or less (e.g., 300 MPa or more and 3000 MPa or less). In the case of stacking the positive electrode layer on a metal foil, a metal foil serving as a positive electrode current collector is used as the metal foil. In the case of stacking the negative electrode layer on a metal foil, a metal foil serving as a negative electrode current collector is used as the metal foil. Note that, after the power generating element has been formed, the power generating element and the at least one metal foil can be integrated to obtain a laminate.

In a stage after the placement of the material of the positive electrode, after the placement of the material of the solid electrolyte layer, or after the placement of the material of the negative electrode layer, the placed material may be subjected to preliminary pressing. The preliminary pressing is usually performed at a pressure lower than the pressure used for the above-described main pressing. The pressure used for the preliminary pressing is not particularly limited, and may be in the range from 1 MPa to 10 MPa. To reduce the voids in the laminate, at least some of the steps for forming the laminate may be performed under reduced pressure.

In the step (i), at least one layer (e.g., all layers) selected from the group consisting of the positive electrode layer, the solid electrolyte layer, and the negative electrode layer may be formed using a material that does not include a liquid component (e.g., a material that includes a powder and does not include a liquid component). As the method for placing, in the form of a layer, a material that does not include a liquid component (dispersing medium), it is possible to use electrostatic spraying, squeegee film formation, or electrostatic coating. By forming the laminate using a method (dry method) involving pressing a material that does not include a liquid component, a laminate that can be easily broken in the breaking step can be obtained.

Note that at least one layer (e.g., all layers) selected from the group consisting of the positive electrode layer, the solid electrolyte layer, and the negative electrode layer may be formed using a mixture (e.g., a slurry) including the material(s) for forming the layer(s) and a liquid component. In that case, for example, each of the layers and the laminate can be formed by applying, drying, and pressing the mixture. Also in the case of using a mixture including a liquid component, a laminate that can be broken in the breaking step can be obtained by performing drying (removal of the liquid component) and/or pressing. The liquid component is not particularly limited, and any known liquid component (dispersing medium) used for forming known power generating elements may be used. Examples of the liquid component include butyl butyrate, dibutyl ether, heptane, water, ethanol, acetone, tetrahydrofuran, and N-methyl-2-pyrrolidone.

Note that the formation methods of the laminate and the layers constituting the laminate are not particularly limited as long as the laminate and the layers can be broken in the breaking step. For example, some of the layers may be formed by a thermal spraying method and other methods.

The proportion of the powder material in at least one layer (e.g., all layers) of the power generating element may be 50 mass% or more, or 70 mass% or more, and may be 100 mass% or less. When the power generating element includes a layer in which the proportion of the powder material is 50 mass% or more, the power generating element is highly brittle, and can be easily broken in the breaking step. The proportion of the powder material in the positive electrode layer, the proportion of the powder material in the negative electrode layer, and the proportion of the powder material in the solid electrolyte layer may each be in the range defined by the lower and upper limits of the aforementioned proportions of the powder material. The powder material may be an inorganic material powder, or a mixture of an inorganic material powder, and an organic material powder.

The material of at least one layer (e.g., all layers) selected from the group consisting of the positive electrode layer, the solid electrolyte layer, and the negative electrode layer may or may not include a binder. From the viewpoint of facilitating the breaking step, it is preferable that the aforementioned material does not include a binder, or includes a binder in a small amount. As long as the breaking step can be performed, the content of the binder in each of the layers may be 10 mass% or less (e.g., 5 mass% or less, or 3 mass% or less), or may be higher. When the aforementioned material includes a binder, the binder is not particularly limited, and any known binder used for forming known power generating elements may be used. Examples of the binder includes rubbers such as styrene-butadiene rubber and butylene rubber, polyvinylidene fluoride-based polymers, and acrylic resins.

Note that each of the materials of the layers pressed by main pressing may be prepared in the form of a layer in advance before being placed. That is, at the time of forming the power generating element, at least one layer selected from the group consisting of the positive electrode layer, the solid electrolyte layer, and the negative electrode layer may be formed in advance as a single layer by drying and/or pressing the material. Then, the single layer may be disposed on a metal foil or another layer, and be subjected to main pressing, thereby forming a laminate.

Typically, the step (ii) includes the steps of: (ii-a) breaking the power generating element at the division position; and (ii-b) of cutting the at least one metal foil at the division position. When the metal foils are disposed on two principal surfaces of the power generating element, the two disposed metal foils are cut in the step (ii-b). Usually, the step (ii-a) is completed before the step (ii-b) is completed. For example, the step (ii-a) and the step (ii-b) may be performed in this order, or the step (ii-b) may be performed after the step (ii-a) has been completed. Alternatively, the step (ii-b) may be started before the step (ii-a) is completed, and the step (ii-a) may be completed before the step (ii-b) is completed.

The timing at which the step (ii-a) is completed and the timing at which the step (ii-b) is performed can be changed according to the shape and the like of a second mold described below. The following description relating to the breaking step can be applied to the step (ii-a), and the following description relating to the cutting step can be applied to the step (ii-b).

### (Breaking step)

The breaking step is a step of breaking the power generating element at a linear division position. The linear division position is usually straight, but need not be straight as long as the power generating element can be broken at the division position. For example, the division position may be gradually curved, have a linear shape composed of a gradual curve and a straight line, or have a linear shape composed of a plurality of straight lines. In one aspect, the breaking step is a step of breaking the power generating element at the division position by bending the power generating element (laminate) such that stress is generated in the division position. In a portion of the power generating element that is located at the division position, a groove or the like may or may not be formed before the breaking step. In the production method (M1), the power generating element can be broken at the division position without forming a groove in the power generating element.

Note that the breaking step is performed so as to prevent the metal foil included in the laminate from being cut. The angle at which the power generating element is bent at the division position is usually a slight angle. Examples of this angle will be described later.

The step (ii) is usually performed while at least a portion of the laminate is fixed. The method for fixing the laminate is not particularly limited, and a method involving pressing the laminate using a member, a vacuum suction method, and so forth may be used as long as the laminate can be fixed.

In the step (ii), the power generating element may be broken at the division position by applying, while a portion (fixed portion) of the laminate is fixed, force to another portion of the laminate that is located opposite to the aforementioned portion with the division position interposed between the portions. With this configuration, it is possible to break the power generating element at the division position with a high yield, without forming a groove or the like in the portion corresponding to the division position. As long as the power generating element can be divided at the division position, the portion that is fixed is not limited. For example, an adj acent portion that is adjacent to the division position may be fixed. In the case of fixing the adjacent portion, it is preferable to perform the step (ii) while the whole of the adj acent portion is fixed. The position to which force is applied is not limited as long as the power generating element can be divided at the division position. For example, the power generating element can be easily divided by pressing a portion that is located opposite to the fixed portion with the division position interposed between the portion and the fixed portion, and that is located away from the division position.

The step (ii) may be performed while a portion of the laminate that is located toward a side where the aforementioned force is applied, relative to the fixed portion, is not fixed. This configuration allows stress to be focused on the division position, thus making it possible to break the power generating element at the division position with a high yield.

### (Cutting step)

In the cutting step, the metal foil is cut at the above-described division position. In an example of the cutting step, the metal foil is cut by shearing. Usually, the breaking step and the cutting step are performed successively in a short time. For example, the total time during which the breaking step and the cutting step are performed may be 1 second or less (e.g., 100 mS or less).

According to Patent Literature 1, the laminate (power generating element) is punched out into a predetermined shape by shearing, thereby forming a plurality of cell components. However, as stated above, cutting the laminate including the power generating element by shearing results in a roughened cross section, so that a short circuit is likely to occur. When the laminate includes a metal foil, a short circuit due to shearing is particularly likely to occur. A possible cause of this that preferred conditions for shearing the metal foil are different from preferred conditions for shearing the power generating element. The power generating element including an inorganic material powder as a main material is more susceptible to brittle fracture than the metal foil. In contrast, the metal foil is easily plastically deformed, and is therefore less susceptible to brittle fracture. For this reason, a short circuit is likely to occur in the case of cutting a laminate including a power generating element and a metal foil, and there has been no known effective method for cutting such a laminate while suppressing a short circuit.

Since laminates are thin, those skilled in the art, from their common technical knowledge, have not investigated any methods other than a method in which a laminate including a power generating element and a metal foil are collectively sheared at a time. Usually, it it unlikely that it is possible to break only the power generating element without cutting the thin metal foil. However, as a result of investigation, the present inventor has found that it is possible to break only the power generating element while leaving the thin metal foil. Furthermore, the present inventor has also newly found that, by dividing the power generating element by breaking, and cutting the metal foil, it is possible to divide the laminate while suppressing a short circuit. The present disclosure is based on these new findings.

The step (ii) may be performed using a first mold and a second mold with the laminate disposed on the first mold. In that case, the power generating element can be broken at the division position by pressing a portion of the laminate that is located away from the first mold (a portion located away from the division position) using the second mold. Furthermore, the metal foil can be cut at the division position using the first mold and the second mold. This method makes it possible to easily perform the breaking step and the cutting step successively. In the case of using the first mold and the second mold, the breaking step and the cutting step can be performed by a single movement of the second mold in a predetermined direction. Note that a "portion of the laminate that is located away from the first mold" is, from another perspective, is a portion of the laminate that is located opposite to the side where the first mold is present with the division position interposed between the portion and the first mold.

A known punch, die, and drive mechanism of a shearing apparatus for use in a known shearing process that have been modified to be adapted to the production method (M1) may be used as the first mold, the second mold, and the mechanism for driving the first mold and the second mold, respectively. Accordingly, in an example of the production method (M1), the second mold can be read as a punch, and the first mold can be read as a die. Alternatively, in an example of the production method (M1), the second mold may be read as an upper mold, and the first mold may be read as a lower mold. An apparatus obtained by improving, for example, a known press working machine including a punch and a die, or a known shearing machine as necessary may be used as a production apparatus that performs the production method (M1).

The step (ii) may be performed using the first mold and the second mold, and a retaining member. In that case, in the step (ii), while a portion of the laminate is fixed using the first mold and the retaining member, the power generating element may be broken at the division position by pressing, using the second mold, another portion of the laminate that is located away from the first mold. By breaking the power generating element while a portion of the laminate is fixed, the power generating element can be easily broken at the division position. Note that the breaking step and the cutting step can be performed successively while the adjacent portion is kept fixed using the first mold and the retaining member. This facilitates cutting of the metal foil in the cutting step as well. The material of the retaining member is not particularly limited, and an elastic material (e.g., rubber, etc.), or an inorganic material such as metal may be used.

The distance between the first mold and the portion to which the force is applied (e.g., the portion pressed using the second mold) may be 0.5 mm or more, 1 mm or more, 2 mm or more, or 3 mm or more. The portion to which the force is applied is not particularly limited, the force may be applied to a portion of the laminate that protrudes from the first mold that is located furthest away from the first mold, or the force may be applied to a portion closer to the first mold than the aforementioned portion. That is, the distance between the first mold and the portion to which force is applied may be less than or equal to the distance between the first mold and the portion of the laminate that is furthest away from the first mold.

The step (ii) may be performed while a portion of the laminate that is located toward the portion pressed using the second mold, relative to the fixed portion, is not fixed. For example, the step (ii) may be performed while a portion of the laminate that is not located on the first mold is not fixed.

The second mold may include a shoulder portion for cutting the metal foil, and a pressing portion for pressing the laminate. In that case, the power generating element can be broken at the division position by pressing, using the pressing portion, a portion of the laminate that is located away from the first mold. Furthermore, the metal foil can be sheared at the division position using the first mold and the shoulder portion.

In the case of using the first mold and the second mold, the step (ii) may be performed by rotating the second mold. For example, as will be described later in Embodiment 1, the second mold may be rotated about a rotation shaft located at a position away from the division position as a rotation center. It is, of course, possible to perform the step (ii) by moving the second mold in a certain direction.

In the above-described manner, the laminate can be divided. The laminate is divided into final size laminates, and thereafter each of the laminates is used to produce a solid-state battery. With the production method (M1), it is possible to produce a solid-state battery including a laminate including a power generating element including a positive electrode layer, a negative electrode layer, and a solid electrolyte layer disposed between the positive electrode layer and the negative electrode layer; and at least one metal foil disposed on at least one principal surface of the power generating element. On at least one side surface of the laminate, the power generating element may have an end face formed as a result of the breaking step, and the at least one metal foil may have an end face formed as a result of the cutting step(e.g., shearing step).

The method for producing a solid-state battery using the laminate obtained in the step (ii) is not particularly limited, and a known method may be used. In an example of a production method in which a laminate having a metal foil disposed on only one side of a power generating element is prepared in the step (i), first, another current collector is formed on a side of the laminate where the metal foil (current collector) is not formed, to form a power generator (laminate) having a stacked structure of metal foil/power generating element/current collector. Another current collector may be a metal foil, or may be formed by evaporation or the like. When a laminate having metal foils disposed on both sides of a power generating element is prepared in the step (i), the laminate can be used as is as the power generator.

Next, a positive electrode lead and/or a negative electrode lead is connected to the obtained power generator as necessary, and thereafter the power generator is housed in an exterior member, thus obtaining a solid-state battery. The power generator may be compressed in the stacking direction before or after being housed in the exterior member. The solid-state battery may include only one laminate described above, or may include a power generator composed of a plurality of laminates that are stacked together. In the case of stacking a plurality of laminates, the above-described formation of another current collector may be omitted.

The exterior member is not particularly limited, and a known exterior member may be used. The exterior member may include a bag-shaped member formed by a case and/or a film. For example, the power generator may be enclosed in a bag-shaped member formed by a laminate film, and the bag-shaped member in which the power generator is enclosed may be further housed in a case. At this time, the power generator may be enclosed in the bag-shaped member with the interior of the bag-shaped member or the case depressurized.

### (Second production method (M2))

The production method (M2) is a production method in which the laminate does not include a metal foil disposed at a position corresponding to the division position. The production method (M2) includes a step (I) and a step (II) in this order. The step (I) is a step of preparing a laminate that includes a power generating element including a positive electrode layer, a negative electrode layer, and a solid electrolyte layer disposed between the positive electrode layer and the negative electrode layer, and that does not include the metal foil. The step (II) is a step of breaking the power generating element at the division position by applying force to a portion of the laminate that is located away from the division position such that stress is applied to a portion of the laminate that corresponds to the linear division position.

Except that the laminate does not include the metal foil, the steps (I) and (II) of the production method (M2) can be performed in the same manner as the steps (i) and (ii) of the production method (M1). Therefore, redundant descriptions thereof have been omitted. For example, in the step (I), the respective materials of the layers may be disposed in a predetermined order on a metal plate or a resin plate instead of a metal foil, and thereafter be subj ected to main pressing, thus forming a laminate. As the step (II), only the breaking step of the step (ii) may be performed.

Alternatively, the step (II) may be a step of breaking the power generating element at the division position by applying the force to a portion of the laminate that is located away from the division position, with the members disposed in linear contact with the laminate along the linear division position.

In the same manner as in the production method (M1), the laminate is also divided into final size laminates by repeating the step (II) a plurality of times as necessary in the production method (M2). Current collectors are formed on both sides of each of the obtained final size laminates as necessary, to form a power generator (laminate) having a stacked structure of current collector/power generating element/current collector. Using the obtained power generator, a solid-state battery (e.g., an all-solid-state battery) is produced in the same manner as in the production method (M1).

Examples of the constituent elements of a solid-state battery produced in the present embodiment will be described below. Note, however, that the following constituent elements are illustrative, and solid-state batteries using other constituent elements can be produced by the production method according to the present embodiment. In the following, an example of an all-solid-state battery (in particular, all-solid-state lithium ion battery) will be mainly described.

### (Positive electrode layer)

The positive electrode layer includes a positive electrode active material, and may include other components as necessary. Examples of the other components include known components used for the positive electrode in an all-solid-state battery. From the viewpoint of increasing the lithium ion conductivity in the positive electrode layer, the positive electrode layer preferably includes, together with the positive electrode active material, a solid electrolyte that exhibits lithium ion conductivity. As the solid electrolyte, any solid electrolytes used for the solid electrolyte layer in an all-solid-state battery can be used without any particular limitation, as long as the solid electrolytes exhibit lithium ion conductivity. Usually, the positive electrode active material is used in the state of particles (powder). As stated above, the positive electrode layer can be formed by compression molding a powder of the positive electrode active material or a positive electrode mixture (including a powder of the positive electrode active material, an additive, etc.).

As the positive electrode active material, it is possible to use a material that can be used as the positive electrode active material in an all-solid-state battery. In the case of an all-solid-state lithium ion battery, examples of the positive electrode active material include lithium-containing composite oxides and compounds other than oxides. Examples of the lithium-containing composite oxides include lithium cobaltate, lithium nickelate, lithium manganate, and other lithium-containing composite oxides (LiNi_{0.8}Co_{0.15}Al_{0.05}O₂, etc.). Examples of the compounds other than oxides include olivine-based compounds (LiMPO₄) and sulfur-containing compounds (Li₂S, etc.). Note that, in the above formulas, M represents a transition metal. The positive electrode active materials may be used alone, or in combination of two or more thereof.

In the case of using the positive electrode active material in the form of powder, the average particle diameter of the positive electrode active material may be, for example, 3 µm or more or 4 µm or more, and 15 µm or less or 11 µm or less. In this specification, the average particle diameter is a median diameter (D50) in a volume-based particle size distribution, as measured using a laser-diffraction particle size distribution analyzer.

### (Negative electrode layer)

The negative electrode layer includes a negative electrode active material, and may include other components as necessary. Example of the other components include known components used for the negative electrode in an all-solid-state battery. The negative electrode layer may include the negative electrode active material and a solid electrolyte that exhibits lithium ion conductivity. Usually, the negative electrode active material is used in the state of particles (powder). As stated above, the negative electrode layer can be formed by compression molding a powder of the negative electrode active material or a negative electrode mixture (including a powder of the negative electrode active material, an additive, etc.).

As the negative electrode active material, it is possible to use a material that can be used as the negative electrode active material in an all-solid-state battery. In the case of an all-solid-state lithium ion battery, a predetermined material (e.g., a carbonaceous material, a simple substance or an alloy of a metal or a metalloid, or a compound) capable of reversibly adsorbing and desorbing lithium ions can be used as the negative electrode active material. Examples of the carbonaceous material include graphite (natural graphite, artificial graphite, etc.), hard carbon, and amorphous carbon. Examples of the simple substance and the alloy of a metal or a metalloid include lithium metals or alloys, and a Si simple substance. Examples of the compound include oxides (a titanium oxide, a silicon oxide, etc.), sulfides, nitrides, hydrates, and silicides (a lithium silicide, etc.). The negative electrode active materials may be used alone, or in combination of two or more thereof. For example, a silicon oxide and a carbonaceous material may be used in combination. As the negative electrode active material, particles including graphite particles and amorphous carbon that coats the graphite particles may be used.

In the case of the negative electrode active material in the form of powder, the average particle diameter of the negative electrode active material may be, for example, 3 µm or more or 4 µm or more, and 50 µm or less or 30 µm or less.

### (Solid electrolyte layer)

The solid electrolyte layer interposed between the positive electrode and the negative electrode includes a solid electrolyte that conducts charge carriers. Usually, the solid electrolyte is used in the state of particles (powder). As stated above, the solid electrolyte layer can be formed by compression molding a material including a powder of the solid electrolyte.

As the solid electrolyte, it is possible to use a material that can be used as the solid electrolyte in an all-solid-state battery. In the case of an all-solid-state lithium ion battery, a substance having lithium ion conductivity can be used as the solid electrolyte. Examples of such a solid electrolyte include inorganic solid electrolytes such as a sulfide (sulfide-based solid electrolyte) and a hydride (hydride-based solid electrolyte).

Examples of the sulfide include Li₂S-SiS₂, Li₂S-P₂S₅, Li₂S-GeS₂, Li₂S-B₂S₃, Li₂S-Ga₂S₃, Li₂S-Al₂S₃, Li₂S-GeS₂-P₂S₅, Li₂S-Al₂S₃-P₂S₅, Li₂S-P₂S₃, Li₂S-P₂S₃-P₂S₅, LiX-Li₂S-P₂S₅, LiX-Li₂S-SiS₂, and LiX-Li₂S-B₂S₃ where X is I, Br, or Cl. Examples of the hydride include a LiBH₄-LiI-based complex hydride and a LiBH₄-LiNH₂-based complex hydride.

### (Positive electrode current collector)

Usually, a positive electrode current collector is disposed on the outside of the positive electrode layer in the power generating element. As the positive electrode current collector, a metal foil may be used. Examples of the material of the positive electrode current collector (e.g., a metal foil) include aluminum, magnesium, stainless steel, titanium, iron, cobalt, zinc, tin, and alloys thereof.

### (Negative electrode current collector)

Usually, a negative electrode current collector is disposed on the outside of the negative electrode layer in the power generating element. As the negative electrode current collector, a metal foil may be used. Examples of the material of the negative electrode current collector (e.g., a metal foil) include copper, nickel, stainless steel, titanium, and alloys thereof. One of the positive electrode current collector and the negative electrode current collector is the metal foil included in the laminate in the production method (M1).

In the case of producing a solid-state battery other than an all-solid-state battery, a current collector and a power generating element corresponding to the solid-state battery are used as the current collector (metal foil) and the power generating element. As the power generating element of a solid-state battery other than an all-solid-state battery, a power generating element of a known solid-state battery other than an all-solid-state battery may be used. Such a sold-state battery can be produced by the production method (M1) and the production method (M2) as long as the power generating element thereof can be broken in the breaking step. Examples of the power generating element that can be broken in the breaking step include power generating elements in which each of the positive electrode layer, the solid electrolyte layer, and the negative electrode layer is formed of a solid or a semi-solid. Such a power generating element may be a power generating element in which at least one (e.g., all) of the positive electrode layer, the solid electrolyte layer, and the negative electrode layer is formed of a solid.

### (Production apparatus of solid-state battery)

The production apparatus according to the present embodiment is a production apparatus of a solid-state battery (e.g., an all-solid-state battery). With this production apparatus, the production method (M1) can be easily performed. Note, however, that the production method (M1) may be performed using an apparatus other than the apparatus described below. The matters described in relation to the production method (M1) can also be applied to the following production apparatus, and therefore redundant descriptions thereof may be omitted. Also, the matters described in relation to the production apparatus may also be applied to the production method (M1). Note that the production method (M2) can also be performed using the following production apparatus except that the cutting step is not performed. In the case of performing the production method (M2), the mechanisms (e.g., the shoulder portions of the first and second molds) for performing the cutting step are not needed.

The following is a description of a production apparatus (hereinafter may be referred to as a "production apparatus (D)") that can perform the production method (M1). In this case, the solid-state battery (e.g., an all-solid-state battery) includes a laminate including a power generating element including a positive electrode layer, a negative electrode layer, and a solid electrolyte layer disposed between the positive electrode layer and the negative electrode layer, and at least one metal foil disposed on at least one principal surface of the power generating element. The production apparatus (D) includes a breaking mechanism for braking the power generating element at a linear division position, and a cutting mechanism for cutting the at least one metal foil at the division position.

The production apparatus (D) may include a first mold and a second mold that function as the breaking mechanism and the cutting mechanism. Furthermore, the production apparatus (D) may include a drive mechanism for driving the second mold (the first mold and the second mold as necessary). The second mold may include a pressing portion that functions as the breaking mechanism by pressing a portion of the laminate that is located away from the first mold, and a shoulder portion that functions as the cutting mechanism.

A die and a punch for use in a known shearing apparatus that have been modified to be adapted to the production apparatus (D) may be used as the first mold and the second mold. For example, as the shoulder portion of the second mold and the first mold (in particular, the shoulder portion of the first mold), a shoulder portion and a die similar to a shoulder portion of a punch and a die (in particular, a shoulder portion of a die) of a known shearing apparatus may be used.

The production apparatus (D) may further include a mechanism for rotating the second mold. The rotating mechanism is not particularly limited, and a known mechanism may be used. For example, the production apparatus (D) may include a motor or the like that rotates the second mold about a rotation shaft thereof. The production apparatus (D) may further include a retaining member for fixing the laminate to the first mold.

The production apparatus (D) performs the step (ii) of breaking the power generating element at a linear division position, and cutting the at least one metal foil at the division position. Since the step (ii) has been described above, redundant descriptions thereof have been omitted. For example, the production apparatus (D) may break the power generating element at a linear division position by pressing, using the second mold, a portion of the laminate that is located away from the first mold, with the laminate disposed on the first mold, and cutting the at least one metal foil at the division position using the first mold and the second mold.

The production apparatus (D) includes a drive mechanism for driving at least the second mold. If necessary, the production apparatus (D) includes a feeding mechanism for feeding out the laminate. Furthermore, the production apparatus (D) may include a control apparatus for controlling these mechanisms. The mechanisms and the control apparatus are not particularly limited. Mechanisms and a control apparatus used in a known shearing apparatus or pressing apparatus may be used, or such mechanisms and control apparatus may be modified to be adapted to the present embodiment, and be used. The control apparatus (D) includes, for example, a storage device storing a program for performing the necessary steps such as the step (ii), and an arithmetic processing unit for executing the program.

In the following, examples of embodiments of the present disclosure will be described in detail with reference to the drawings. The description of the embodiment described above can be applied to the production method and the production apparatus described below, and the following production method and the production apparatus may be changed based on the above description. Of the steps of the production method and the constituent elements of the production apparatus described below, any step and any constituent element that are not essential to the production method and the production apparatus according to the present disclosure may be omitted. The matters described below may be applied to the embodiment described above. Note that the following drawings are schematic views, and the scales thereof are different from the actual scales. In the following drawings, illustrations of the members may be partially omitted to facilitate viewing.

### (Embodiment 1)

In Embodiment 1, an example of the first production method (M1) and an example of the production apparatus (D) used in the first production method (M1) will be described. In the following examples, a production method of an all-solid-state battery including a laminate of metal foil/positive electrode layer/solid electrolyte layer/negative electrode layer that are stacked in this order will be described. However, an all-solid-state battery including a laminate of metal foil/negative electrode layer/solid electrolyte layer/positive electrode layer that are stacked in this order, a laminate of metal foil/positive electrode layer/solid electrolyte layer/negative electrode layer/metal foil that are stacked in this order, or a laminate of metal foil/negative electrode layer/solid electrolyte layer/positive electrode layer/metal foil that are stacked in this order can be produced in the same manner. A solid-state battery other than an all-solid-state battery can also be produced in the same manner.

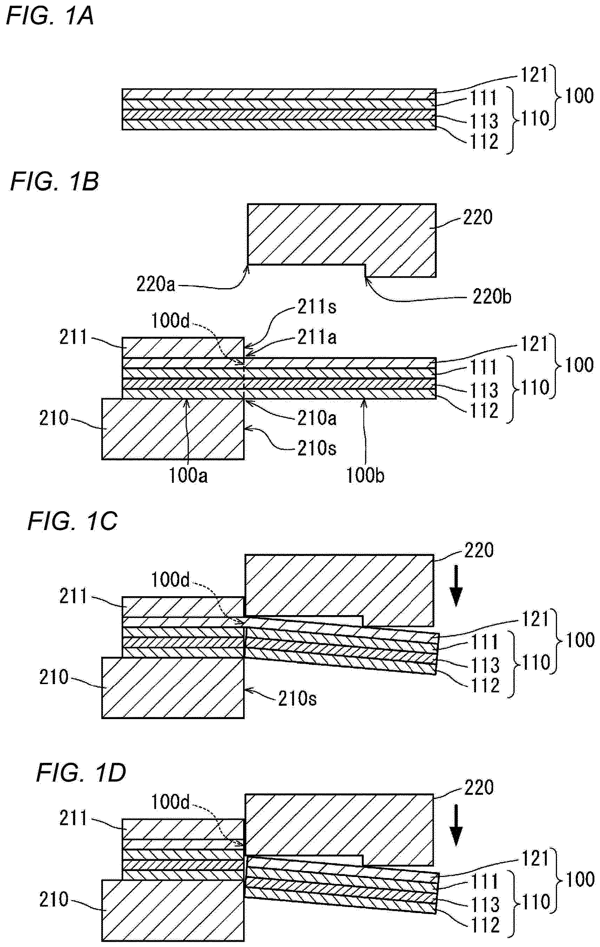

In the production method according to Embodiment 1, first, as shown in FIG. 1A, a laminate 100 is prepared. The laminate 100 includes a power generating element 110 and a metal foil 121. The power generating element 110 includes a positive electrode layer 111, a negative electrode layer 112, and a solid electrolyte layer 113. The laminate 100 can be formed using the above-described method.

Next, as shown in FIG. 1B, the laminate 100 is disposed on a lower mold (first mold) 210, and the laminate 100 is sandwiched and fixed by the lower mold 210 and a retaining member 211. Specifically, an adjacent portion 100a of the laminate 100 that is adj acent to a division position 100d is fixed. Of the laminate 100, a protrusion 100b protruding from the lower mold 210 is not fixed.

At this time, it is preferable that the laminate 100 is disposed such that the metal foil 121 is located opposite to the lower mold 210. This allows the laminate 100 to be cut with a particularly high yield. Note, however, that the laminate 100 may be disposed such that the metal foil 121 is located toward the lower mold 210.

The lower mold 210 has a corner portion 210a that extends linearly. An upper mold (second mold) 220 has a shoulder portion 220a for cutting the metal foil 121, and a pressing portion 220b for pressing the laminate 100. Each of the shoulder portion 220a and the pressing portion 220b has the shape of a corner that extends linearly. These shapes can be changed according to the shape of the division position 100d. The shape of the pressing portion 220b is not particularly limited as long as the breaking step can be performed. For example, the pressing portion 220b need not have the shape of a corner, and need not extend linearly.

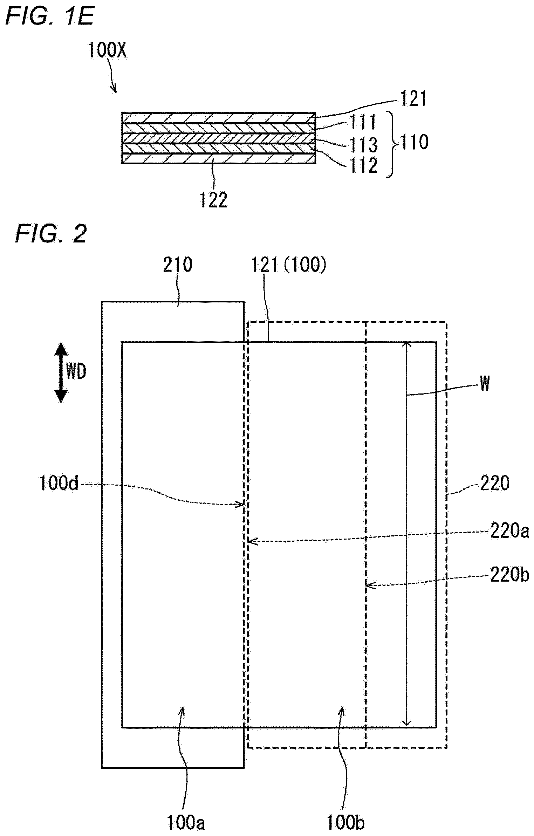

FIG. 2 schematically shows the placement of the laminate 100 and the lower mold 210 shown in in FIG. 1B, as viewed from above. FIG. 2 also shows an example of the placement of the upper mold 220. FIG. 2 shows a width direction WD as the direction in which the division position 100d extends, and a width W as the width of the laminate 100 in the width direction WD. Preferably, the retaining member 211 presses and fixes at least a portion (e.g., the adjacent portion 100a) of the laminate 100 over the entire length (width W) of the division position 100d. Note, however, that only a portion of the width W may be pressed and fixed as long as the laminate 100 can be divided,.

As shown in FIG. 2, the shoulder portion 220a and the pressing portion 220b are preferably shaped so as to be in contact with the metal foil 121 (laminate 100) over the entire width of the laminate 100. Note, however, that the pressing portion 220b may be in contact with the metal foil 121 (laminate 100) over a range narrower than the width W as long as the breaking step can be performed without any problem. When the metal foil 121 is larger than the power generating element 110, the width of the shoulder portion 220a is set to be greater than or equal to the width of the metal foil 121 in order to perform shearing reliably.

The laminate 100 is cut along the straight division position 100d. In the example shown in FIG. 1B, the lower mold 210 and the retaining member 211 are disposed such that their respective straight corner portions 210a and 211a extend along the division position 100d. As shown in FIG. 1B, an end face 210s of the lower mold 210 and an end face 211s of the retaining member 211 may be flush with each other. Alternatively, the end face 211s may be at a position that is located on the lower mold 210 and is away from the end face 210s.

Next, as shown in FIG. 1C, the power generating element 110 is broken along the division position 100d by applying, using the upper mold 220, force to a portion located away from the lower mold 210 (from another perspective, a portion located away from the adj acent portion 100a) (step (ii-a)). Specifically, the power generating element 110 is broken by moving the upper mold 220 in the arrow direction in FIG. 1C. Note that the position at which the laminate 100 is fixed is not limited to the adjacent portion 100a, and the laminate 100 may be fixed at a position located away from the division position 100d. In that case as well, by pressing the laminate 100 using the upper mold 220, stress is focused on a portion (division position 100d) of the laminate 100 that extends along the corner portion 210a. As a result, the power generating element 110 can be broken along the division position 100d.

The pressing portion 220b protrudes further than the shoulder portion 220a. Accordingly, at the point in time when the pressing portion 220b and the laminate 100 have come into contact with each other, the shoulder portion 220a and the laminate 100 (metal foil 121) are not in contact with each other. The position and the amount of protrusion of the pressing portion 220b can be selected such that the power generating element 110 can be broken before completion of cutting of the metal foil 121.

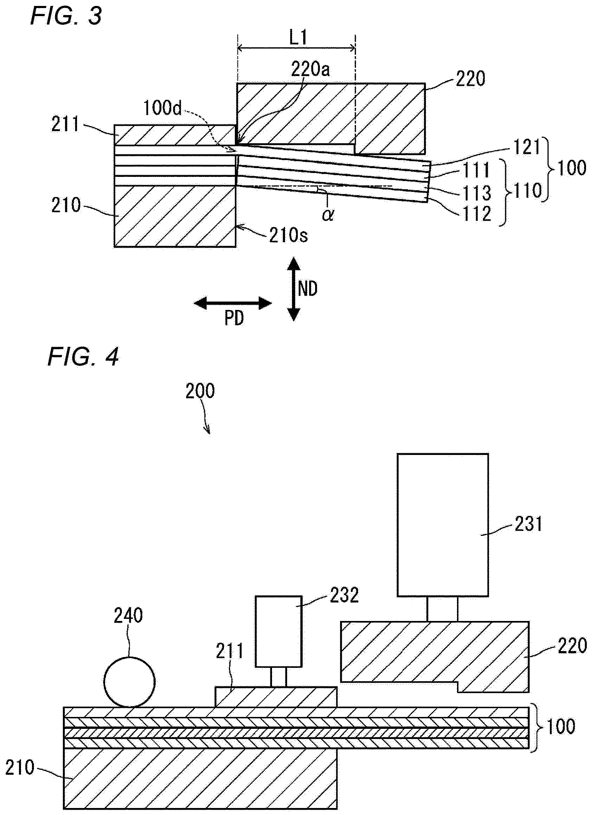

FIG. 3 schematically shows the state of the laminate 100 and so forth at the timing at which the power generating element 110 has been broken. Note that the hatching of the laminate 100 has been omitted in FIG. 3. The power generating element 110 is highly brittle, and therefore may be broken at a slight angle. An angle α at which the power generating element 110 is bent when the power generating element 110 is broken is, for example, in the range from 0.5° to 5 °.

A direction parallel to a surface of the laminate 100 that is disposed on the lower mold 210, and is orthogonal to the division position 100d is referred to as a direction PD. A direction perpendicular to a surface of the laminate 100 that is disposed on the lower mold 210 is referred to as a direction ND. A distance L1 (distance in the direction PD) between the division position 100d and the portion pressed using the pressing portion 220b may be 0.3 mm or more, or 0.5 mm or more. The upper limit of the distance L1 may be less than or equal to the length of the portion of the laminate that protrudes from the lower mold 210, and may be 100 mm or less, or 80 mm or less. An interval L2 (interval in the direction PD, not shown) between the end face 210s of the lower mold 210 and the shoulder portion 220a of the upper mold 220 when shearing the metal foil 121 may be an interval that allows the metal foil 121 to be appropriately sheared, and is preferably 5 µm or less (e.g., 3 µm or less, or 1 µm or less). The lower limit of the interval L2 is not particularly limited, and may be 0.1 µm or more, or 0.5 µm or more.

In the case of cutting the laminate 100 only by shearing, the interval L2 needs to be increased to a certain extent in order to prevent a short circuit of the power generating element 110. However, when the interval L2 is increased, the metal foil 121 cannot be clearly cut, so that a short circuit due to a cutting defect of the metal foil 121 is likely to occur. In the production method, the power generating element 110 is divided in the breaking step, whereas the metal foil 121 is divided by cutting. Accordingly, even when the interval L2 is reduced to a certain degree (e.g., 5 µm or less, or 1 µm or less), such reduction will not increase the occurrence of a short circuit of the power generating element 110. As a result, a short circuit can be suppressed during cutting of the laminate 100.

After the step shown in FIG. 1C, the upper mold 220 is further moved in the arrow direction, thus cutting the metal foil 121 at the division position 100d as shown in FIG. 1D (step (ii-b)). Specifically, the metal foil 121 is sheared using the lower mold 210 and the shoulder portion 220a of the upper mold 220. Note that the downward movement of the upper mold 220 may be stopped immediately after the metal foil 121 has been cut. By limiting the downward movement of the upper mold 220, it is possible to prevent the end face of the power generating element 110 from being roughened by the upper mold 220. For example, when the metal foil 121 is disposed on only on the upper mold 220 side, the downward movement of the upper mold 220 may be stopped before the shoulder portion 220a reaches the height of an upper surface of the lower mold 210 after the metal foil 121 has been cut.

In this manner, the laminate 100 can be divided. By repeatedly performing the step (ii) for the laminate 100 as necessary, a final laminate 100 having a final size can be obtained.

In the step (ii) (step (ii-a) and step (ii-b)), the speed of movement of the upper mold 220 in the direction ND is not particularly limited, and may be selected such that the step (ii) can be performed. For example, the speed of movement of the upper mold 220 in the direction ND may be in the range from 0.1 cm/s to 50 cm/s (e.g., the range from 1 cm/s to 30 cm/s).

The breaking step and the cutting step can be performed successively by moving the upper mold 220 in the arrow direction. When the amount of protrusion of the pressing portion 220b is too small, and the movement speed in the direction ND is fast, the power generating element 110 may be sheared before the power generating element 110 is broken, so that a short circuit may be likely to occur. Therefore, it is preferable that the amount of protrusion and the movement speed in the direction ND of the pressing portion 220b are each selected within an appropriate range.

The breaking step and the cutting step are performed while a portion of the laminate 100 is fixed, and another portion thereof is not fixed. Specifically, the adj acent portion 100a that is adjacent to the division position 100d is fixed. On the other hand, the protrusion 100b that protrudes from the adj acent portion 100a to the outside of the lower mold 210 is not fixed.

Next, as shown in FIG. 1E, a current collector 122 is disposed, as necessary, on one side (a surface on which the metal foil 121 is not disposed) of the final laminate 100 obtained through the above-described steps. In this manner, a power generator 100X (all-solid-state battery) is obtained. The obtained power generator 100X is housed in an exterior member as necessary. Note that when the laminate 100 includes two metal foils 121 stacked on both sides of the power generating element 110, the final laminate 100 obtained through the above-described steps can be used as is as the power generator.

As a result of subj ecting the laminate 100 to 100 cuts using the method of Embodiment 1 above, none of the cuts caused a short circuit. On the other hand, as a result of subj ecting the laminate 100 to 100 cuts by using a conventional shearing method using a conventional shearing apparatus, almost all of the cuts caused a micro-short circuit between the positive electrode layer 111 and the negative electrode layer 112.

FIG. 4 shows an example of a production apparatus 200 including a lower mold 210, a retaining member 211, and an upper mold 220. The production apparatus shown in FIG. 4 includes a lower mold 210, a retaining member 211, an upper mold 220, drive mechanisms 231 and 232, and a roller 240 (feeding mechanism). The drive mechanism 231 moves the upper mold 220 upward and downward along the arrow direction shown in FIG. 1C. The drive mechanism 232 fixes and releases the laminate 100 by moving the retaining member 211. The roller 240 feeds out the laminate 100 so as to be moved to an appropriate position.

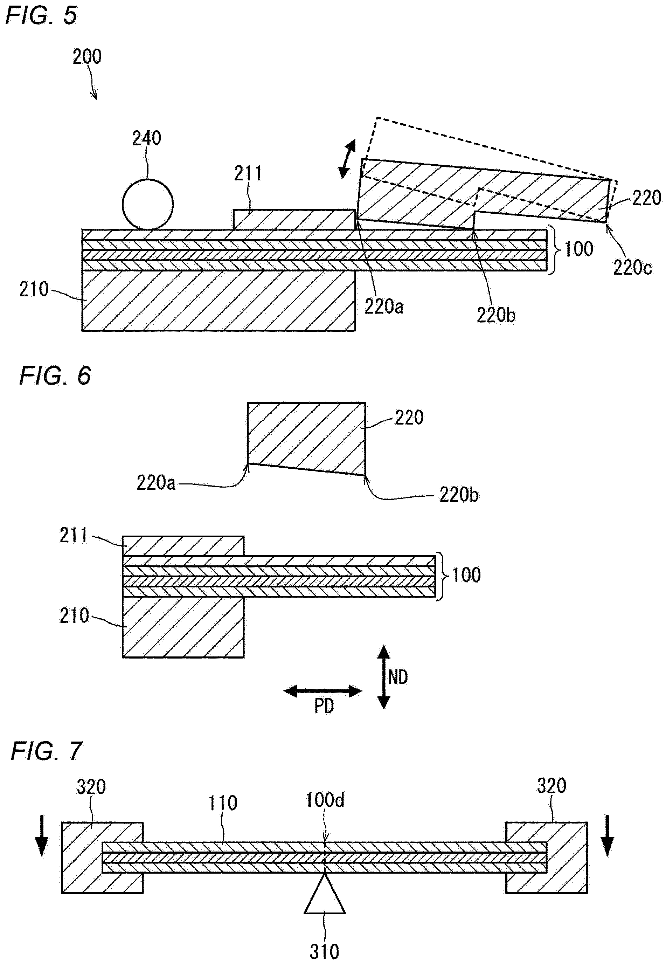

As stated above, the production apparatus 200 performs the step (ii). As long as the step (ii) can be performed, the direction of movement of the upper mold 220 is not limited. For example, as shown in FIG. 5, the drive mechanism may rotate the upper mold 220 about a rotation shaft located at a rotation center 220c. The dotted line indicates the contour of the upper mold 220 before being rotated. The rotation shaft at a position located away from the division position 100d, and extends in a direction parallel to the direction (direction perpendicular to the plane of paper in FIG. 5) in which the division position 100d extends. In the case of rotating the upper mold 220, the step (ii) can also be performed in the same manner as in the case of linearly moving the upper mold 220. Note that the position of the rotation center 220c is not particularly limited, and need not be the position shown in FIG. 5. The upper mold 220 shown in FIG. 5 has a shape different from that of the upper mold 220 described above. In the case of the upper mold 220 shown in FIG. 5, one of two corner portions of the protrusion of a lower surface of the upper mold 220 serves as the shoulder portion 220a, and the other corner portion serves as the pressing portion 220b.

The upper mold 220 is not limited to the examples shown in FIGS. 4 and 5 as long as the step (ii) can be performed using the upper mold 220. FIG. 6 shows an example of another shape of the upper mold 220. In the case of the upper mold 220 shown in FIG. 6, a surface 220s of the upper mold 220 that faces the laminate 100 is inclined, thus forming a pressing portion 220b.

In an example of the production method (M2), the step (II) can be performed in the same manner as in the step (ii-a) of Embodiment 1 except that the laminate 100 is replaced by the power generating element 110. In this case, the upper mold 220 need not include the shoulder portion 220a for cutting the metal foil 121.

FIG. 7 schematically shows another example of the production method (M2). In the example shown in FIG. 7, a member 310 for focusing stress along the division position 100d, and members 320 for pressing both ends of the power generating element 110 (laminate) are used. The member 310 includes a projection that is in linear contact with the power generating element 110 along the division position 100d. The power generating element 110 can be broken along the division position 100d by pressing, along the arrow direction, a portion of the power generating element 110 that is located away from the division position 100d, using the members 320, while the projection is in contact with the power generating element 110 along the division position 100d.

In the above description, only examples in which only one side of the laminate is divided at one time are described. However, it is also possible to divide a plurality of sides of the laminate by a single movement of the second mold. For example, two second molds described above are disposed such that their shoulder portions form an L-shape. Similarly, the first mold and the retaining member are also disposed so as to conform to the second mold. At this time, the two second molds are disposed such that their positions in the direction ND are different (i.e., disposed such that their heights are different). By using the second molds, the first mold, and the retaining member, it is also possible to divide two sides of the laminate by a single movement of the second molds. By using the seam method, it is also possible to divide three or four sides of the laminate by a single movement of the second molds. Note that it is possible to simultaneously divide sides without making their positions in the direction ND different as long as the sides do not intersect each other.

### [Industrial Applicability]

The present disclosure is applicable to a solid-state battery, a production method of a solid-state battery, and a production apparatus of a solid-state battery.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

100: Laminate
100a: Adjacent portion
100d: Division position
110: Power generating element
111: Positive electrode layer
112: Negative electrode layer
113: Solid electrolyte layer
121: Metal foil
200: Production apparatus
210: Lower mold (first mold)
211: Retaining member
220: Upper mold (second mold)
220a: Shoulder portion
220b: Pressing portion

## Claims

1. A production method of a solid-state battery, comprising, in order, the steps of:
(i) preparing a laminate including
a power generating element including a positive electrode layer, a negative electrode layer, and a solid electrolyte layer disposed between the positive electrode layer and the negative electrode layer, and
at least one metal foil disposed on at least one principal surface of the power generating element; and
(ii) breaking the power generating element at a linear division position, and cutting the at least one metal foil at the division position.

2. The production method according to claim 1, wherein
the step (ii) includes the steps of
(ii-a) breaking the power generating element at the division position; and
(ii-b) cutting the at least one metal foil at the division position.

3. The production method according to claim 2, wherein the step (ii-a) is completed before the step (ii-b) is completed.

4. The production method according to any one of claims 1 to 3, wherein, in the step (ii), the power generating element is broken at the division position by applying, while a portion of the laminate is fixed, force to another portion of the laminate that is located opposite to the fixed portion with the division position interposed between the portions.

5. The production method according to claim 4, wherein the step (ii) is performed while a portion of the laminate that is located toward a side where the force is applied, relative to the fixed portion, is not fixed.

6. The production method according to any one of claims 1 to 5, wherein, in the step (ii), the at least one metal foil is cut by shearing.

7. The production method according to any one of claims 1 to 3, wherein
the step (ii) is performed using a first mold and a second mold with the laminate disposed on the first mold,
the power generating element is broken at the division position by pressing, using the second mold, a portion of the laminate that is located away from the first mold, and
the at least one metal foil is cut at the division position using the first mold and the second mold.

8. The production method according to claim 7, wherein
the step (ii) is performed using the first mold, the second mold, and a retaining member, and,
in the step (ii), the power generating element is broken at the division position by pressing, using the second mold, the portion of the laminate that is located away from the first mold, while a portion of the laminate is fixed using the first mold and the retaining member.

9. The production method according to claim 8, wherein the step (ii) is performed while a portion of the laminate that is located toward the portion pressed using the second mold, relative to the fixed portion, is not fixed.

10. The production method according to any one of claims 7 to 9, wherein
the second mold includes a shoulder portion for cutting the at least one metal foil, and a pressing portion for pressing the laminate,
the power generating element is broken at the division position by pressing, using the pressing portion, the portion of the laminate that is located away from the first mold, and
the at least one metal foil is sheared at the division position using the first mold and the shoulder portion.

11. The production method according to any one of claims 7 to 10, wherein the step (ii) is performed by rotating the second mold.

12. The production method according to any one of claims 1 to 11, wherein, in the step (i), the laminate is prepared by stacking respective materials of the positive electrode layer, the solid electrolyte layer, and the negative electrode layer, and the at least one metal foil, and thereafter pressing together the materials and the at least one metal foil that are stacked.

13. A solid-state battery produced by the production method according to any one of claims 1 to 12.

14. A production apparatus of a solid-state battery,
the solid-state battery including a laminate including
a power generating element including a positive electrode layer, a negative electrode layer, and a solid electrolyte layer disposed between the positive electrode layer and the negative electrode layer, and
at least one metal foil disposed on at least one principal surface of the power generating element,
the production apparatus comprising:
a breaking mechanism for breaking the power generating element at a linear division position; and
a cutting mechanism for cutting the at least one metal foil at the division position.

15. The production apparatus according to claim 14, further comprising a first mold and a second mold that function as the breaking mechanism and the cutting mechanism.

16. The production apparatus according to claim 15, wherein the second mold includes a pressing portion that functions as the breaking mechanism by pressing a portion of the laminate that is located away from the first mold, and a shoulder portion that functions as the cutting mechanism.

17. The production apparatus according to claim 15 or 16, further comprising a retaining member for fixing the laminate to the first mold.
